# EUROPÄISCHE PATENTSCHRIFT

(11) **EP 0 636 698 B1**
(45) Veröffentlichungstag und Bekanntmachung des Hinweises auf die Patenterteilung: **26.11.1997**
(21) Anmeldenummer: 94250181.8
(22) Anmeldetag: 18.07.1994
(51) Int. Cl.: C21C 5/56, F27D 13/00

(54) **Verfahren, Vorrichtung und Behälter zum Einsetzen von vorgewärmten Schrott in einen Schmelzofen zur Stahlerzeugung**
Process, installation and container for charging of preheated scrap to a steel melting furnace
Procédé, installation et récipient pour charger des ferrailles préchauffées dans un four d'aciérie

(30) Priorität: 29.07.1993 DE 4325958
(43) Veröffentlichungstag der Anmeldung: 01.02.1995
(73) Patentinhaber: MANNESMANN Aktiengesellschaft, 40213 Düsseldorf (DE)
(72) Erfinder: Schneider, Ralf, D-40822 Mettmann (DE)
(74) Vertreter: Presting, Hans-Joachim, Dipl.-Ing.

(56) Entgegenhaltungen:
- DE-A- 3 243 128
- DE-C- 3 307 400
- US-A- 2 804 295
- STEEL TIMES - INCORPORATING IRON & STEEL, Bd.213, Nr.10, Oktober 1985, LONDON GB Seite 493 NN 'Three-step scrap preheating facilty developed'

## Beschreibung

Die Erfindung betrifft ein Verfahren zum Einsetzen von Schrott in Schmelzöfen zur Stahlerzeugung, bei dem der Schrott vorgewärmt wird und zur Vorwärmung die in den Abgasen des Ofens enthaltenen, sich aus fühlbarer und chemisch gebundener Wärme in den brennbaren Anteilen der Abgase zusammensetzende Energie vewendet wird, wobei das Abgas zu einer in einer Abgasauslaßleitung eingeschaltete Abgasverbrennungskammer geleitet, hier mit Luft zu Verbrennungsgas verbrannt, anschließend mit Schrott gefüllten Behältern zugeführt und über ein Gebläse abgesaugt wird, sowie eine Stahlwerkseinrichtung zur Durchführung des Verfahrens und eine vorrichtung zur Schrotterwärmung zur Durchführung des Verfahrens und zum Einsatz in der Stahlwerkseinrichtung.

Aus der DE PS 31 33 447 ist eine Einrichtung zum Vorheizen von Stahlschrott bekannt, bei dem ein oben offener und zum öffnen und Schließen mit einer Bodenkappe versehener Behälter in eine Grube eingebracht wird, auf der eine mit der Abgasleitung verbundene Haube gasdicht befestigbar ist. Die von der Haube in den Behälter eingeführten heißen Abgase durchströmen den Behälter von oben nach unten und heizen den darin enthaltenen Stahlschrott vor. Die Abgase werden nach diesem Vorheizen des Stahlschrotts durch einen, im Bereich der Bodenkappe vorhandenen Spalt in die Grube geleitet.

In Weiterbildung dieser Schrift ist aus der DE PS 33 07 400 eine Vorwärm-Vorrichtung bekannt, bei der während des Vorwärmens in einem oben offenen vollwandigen Korb mit einem zu öffnen- und schließbaren durchlässigen Boden Gas axial von oben nach unten durch den Korb geführt wird. Zum Transport des Korbes in die Vorwärmvorrichtung wird ein Wagen eingesetzt, der unter die hochgezogene, an der Gasleitung angeschlossene Haube verfahren wird, wobei nach der Positionierung die Haube heruntergelassen wird, bis sie mit ihrem Rand auf dem Rand des Korbes aufsetzt. Der durchlässige Boden des Korbes sitzt auf einem an dem Wagen angeordneten Mundstück auf, das an die Abgasleitung anschließbar ist.

In beiden Fällen ist immer nur ein Korb an die Abgasleitung angeschlossen, das Gas strömt durch den Korb in Richtung Boden und während des Korbwechsels ist die Gaszufuhr unterbrochen.

Aus der DE-A-33 07 400 ist ein Behälter in Form eines vollwandigen Schrottkorbes mit einem als Gitter ausgebildeten Boden bekannt. Ferner ist es aus der US-A-2 804 295 bekannt, die Wandung eines derartigen Schrottkorbes mit einer Wärmeisolierung zu versehen, wobei die innere Wand aus einem warmfesten Material besteht.

Aus der DE OS 32 43 128 ist eine Anordnung zur Schrottvorwärmung bekannt, bei der eine rotierbare Plattform für zwei oder mehrere Schrottkörbe bekannt ist, wobei ein Korb mit erwärmtem Inhalt von der Leitung fortgeschwenkt und ein neuer Korb zu den Leitungen hingeschwenkt werden kann. Zu den Schrottkörben führen Leitungen, die mit Ventilen oder Ventilsystemen versehen sind, mittels derer die warme Luft oder das warme Gas von dem Schrottkorb/den Schrottkörben, vorzugsweise beim Korbwechsel, ferngehalten bzw. weggeleitet oder an diesen vorbeigeleitet werden kann. Die rotierende Plattform und das Ventil am Kanalsystem für die Luft ist derart ausgebildet, daß zur gleichen Zeit ein Korb enderwärmt wird, und ein zweiter Korb vorgewärmt wird, während ein dritter Platz für einen Korb zum Auswechseln der Körbe zugänglich ist. Über die Ausgestaltung der Körbe ist dieser Schrift nichts zu entnehmen, dem Aufbau der Anlage nach kommen offensichtlich die üblichen, mit Bodenkappen versehene Körbe zum Einsatz.

Nachteil der aus dieser Schrift bekannten Anordnung zur Schrottvorwärmung ist zum einen die Gasführung vom Kopf zum Fuß des Korbes und das Erfordernis, beim Korbwechsel das Gas von der Vorwärmstation weg- bzw. an dieser vorbeizuleiten.

Bei den aus den genannten Schriften bekannten Schrottvorwärmungen schmelzen einige Bestandteile, insbesondere kleinere Partikel. Diese Schmelzteilchen werden vom von oben nach unten durch die Möllersäule fließenden Gasstrom mitgerissen und setzen sich vorzugsweise im Bereich des kühleren Gefäßbodens in Form sog. Bären ab.

In Kenntnis der vorgenannten Nachteile hat sich die Erfindung das Ziel gesetzt, ein Verfahren und die dazugehörige Vorrichtung zu schaffen, bei der das Abgas dem gesamten Volumen des in den Körben zum Vorwärmen befindliche Schrott zugeführt wird, dabei ein Minimum von leichten Feststoffen mitreißt und kontinuierlich während der Betriebsphase des Ofens in der Vorwärmstation eingesetzt wird.

Die Erfindung erreicht diese Ziele durch die kennzeichnenden Merkmale der Ansprüche 1, 4 und 10.

Nach dem erfindungsgemäßen Verfahren durchströmen die Verbrennungsgase vollflächig die mit Schrott gefüllten Behälter ohne zeitliche Unterbrechung. Außer in der kurzen unterbrechungszeit, während der ein Behälter gewechselt wird und somit nur der zweite Behälter vom Gas durchströmt wird, sind mindestens zwei Behälter an die Gasversorgung angeschlossen. Die einzelnen Behälter sind dabei in Reine geschaltet und werden jeweils von unten nach oben von den Verbrennungsgasen durchströmt. Der Schrott wird in wärmeisolierte Behälter eingebracht, die eine zylindrische Form haben und deren eine Mündung mit einem Gitter belegt ist. Dieses Gitter besteht aus wärmebeständigem Material und hat eine Maschenweite, die ein Durchfallen des Schrottes auch während des Transportes verhindert, aber während der Aufheizphase ohne jegliche Behinderung die Verbrennungsgase durch die mit Schrott gefüllten Behälter durchströmen läßt. Um ein Zerstören des Gitters beim Füllen der Behälter mit Schrott zu verhindern, wird das Gitter auf eine Prallplatte gesetzt, die eine bürstenförmige Gestalt hat und die Freifläche des Gitters ausfüllt.

Die Schrottbehälter werden mit dem Gitter nach unten zur Schrottvorwärmstation transportiert, die erfindungsgemäß einen Karussellartigen Aufbau aufweist, der ein beliebiges und voneinander unabhängiges Bewegen bzw. Positionieren der einzelnen Behälter zuläßt. Die im karussell verwendeten Fahrgestelle werden dabei festverlegten Rohrleitungen, an denen die Vorwärmgaszu- und -abführungen münden, zugeführt. Durch vertikale Bewegungen der Hauben zum Behälter und/oder der Behälter zu den Hauben, wird eine dichte Gasverbindung während der Aufwärmphase erreicht.

Das Gitter füllt die Mündung des zylindischen Behälters vollständig aus. Das heranströmende Gas wird vor dem Gitter gleichmäßig verteilt und strömt vollflächig und damit sämtliche Schrotteile im Behälter erfassend durch den Schrottbehälter. Die Strömungsgeschwindigkeit wird dabei so gewählt, daß die einzelnen leichten im Schrott enthaltenen Partikel nicht von dem vertikal nach oben durch den Behälter strömenden Gas mitgerissen werden.

Zum Ausleeren der Schrottbehälter werden diese um ihre horizontale Achse gedreht, und zwar entweder unmittelbar vor dem Schmelzofen, um den Schrott durch den Deckel in dem Ofen zu chargieren oder, soweit die Behälter mit einer Bodenkappe ausgerüstet sind, an geeigneter Stelle zwischen der Schrottvorwärmung und dem Schmelzofen.

Die Anordnung des Rohrleitungssystems einschließlich der vorgesehenen Armaturen erlaubt ein beliebiges Führen der Aufwärmgase, und zwar nicht nur ein Durchströmen der in Reine geschalteten Schrottbehälter, sondern auch ein paralleles Aufwärmen der Behälter sowie sogar ein freies Durchströmen durch die Anlage bei eingesetzten Schrottbehältern ohne diese zu durchströmen.

Ein Beispiel der Erfindung ist in der beigefügten Zeichnung dargelegt. Dabei zeigen die
- Figuren 1.1 - 1.3: das Schema verschiedener Schaltzustände.
- Figur 2.1 und 2.2: Schnitt und Draufsicht der Vorwärmstation und
- Figur 3: einen Schnitt durch einen Schrottbehälter.

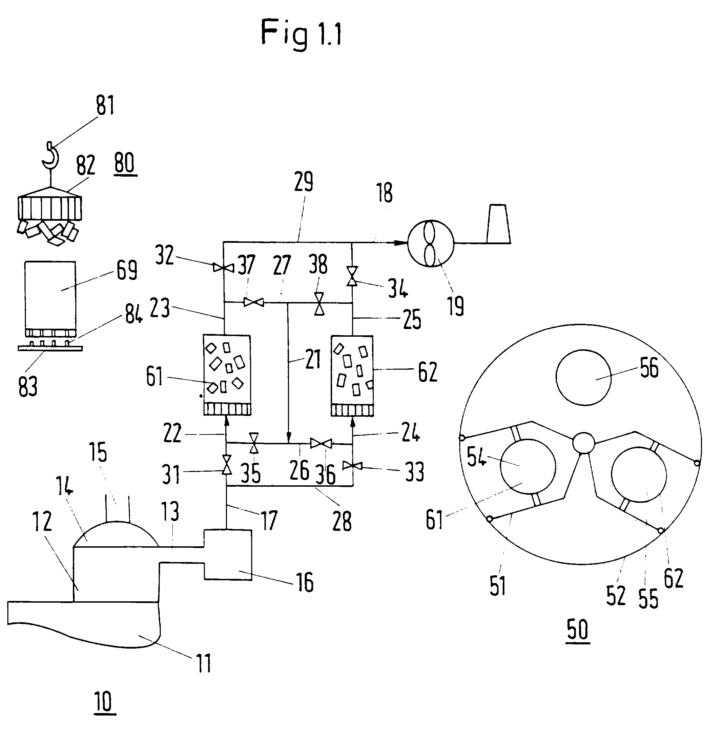

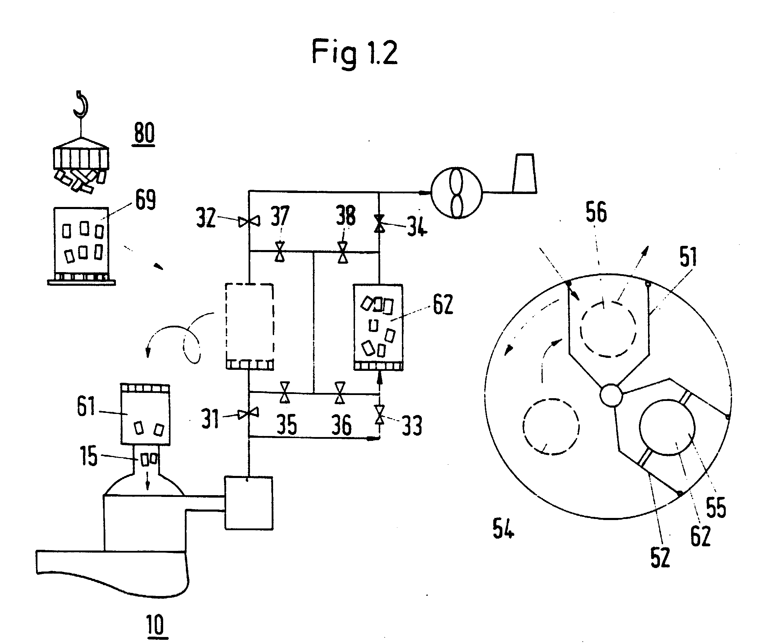

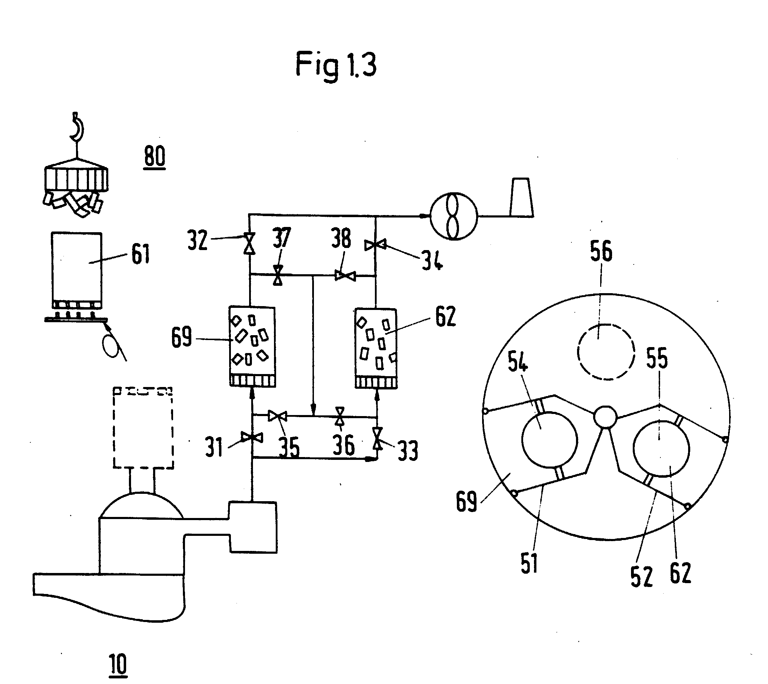

In den Figuren 1.1 bis 1.3 ist ein Schmelzofen 10 skizziert, der ein Untergefäß 11 sowie ein mit einem Deckel 14 verschließbares Obergefäß 12 aufweist. Der Deckel 14 besitzt dabei eine Schrottzufuhr 15. Weiterhin ist an das Obergefäß 12 eine Abgasauslassleitung 13 angeschlossen, die mit einer Abgasverbrennungskammer 16 in Verbindung steht. In der Abgasverbrennungskammer wird das Rauchgas mittels einer nicht weiter dargestellten Luftzuführung zu Verbrennungsgas verbrannt und durch eine Gaszufuhrleitung 17 über eine Gasführung 20 einer Schrottvorwärmstation 50 zugeführt und über eine Gasabführleitung 18 mittels einer Absaugung 19 abgezogen.

Die Gaszuführung 20 weist dabei die Zufuhrleitungen 22 und 24 auf, die über eine Verbindungsleitung 26 sowie eine Umgenungsleitung 28 miteinander verbunden sind. Die heißen Verbrennungsgase werden dabei über die Zufuhr 22 einer ersten Station 54, in der ein Schrottbehälter 61 einbringbar ist, sowie über die Zufuhr 24 einer zweiten Station 55, in der ein Schrottbehälter 62 einbringbar ist, dem Schrott zugeleitet. Die Ausgänge der Schrottbehälter 61, 62, die sich in den Stationen 54 und 55 befinden, sind an die Abfuhren 23 und 25 angeschlossen, die wiederum über Verbindungsleitungen 27 sowie eine Umgenungsleitung 29 miteinander verbunden sind. Darüber hinaus sind die Verbindungsleitungen 26 und 27 über ein Zentralrohr 21 unmittelbar miteinander verbunden.

Eine freie Position 56 ist an Keine der Zu- bzw. Abführungen angeschlossen.

Die Zufuhren 22 und 24 weisen im Bereich zwischen der Verbindungsleitung 26 und der Umgenungsleitung 28 Armaturen 31 bzw. 33 auf. Die Verbindungsleitung 26 besitzt beidseitig zum Anschluß des Zentralrohrs 21 angeordnete Armaturen 35 und 36. Die Abfuhren 23 und 25 besitzen in dem Bereich zwischen der Verbindungsleitung 27 und der Umgenungsleitung 29 die Armaturen 32 und 34. Die Verbindungsleitung 27 besitzt beidseitig zum Anschluß des Zentralrohres 21 die Armaturen 37 und 38.

In der Schrottvorwärmstation 50 sind die Schrottbehälter 61 und 62 in Fahrgestellen 51 und 52 abstellbar. Diese Fahrgestelle 51, 52 sind beliebigen Stationen 54, 55 sowie der freien Position 56 zuführbar. Weiterhin ist im linken oberen Teil der Figuren 1.1 bis 1.3 ein Schrottplatz 80 angedeutet mit an einem Schrotthaken eines Schrottkrans 81 angeordneten Magneten 82, durch den Schrott in einen Schrottbehälter 69 einfüllbar ist. Der Schrottbehälter 69 ist dabei auf einer Bürstenelemente 84 besitzenden Prallplatte 83 abstellbar.

In Figur 1.1 sind die Armaturen 32, 33, 35 und 38 geschlossen. Die heißen Verbrennungsgase strömen über die Zufuhr 22 durch den Schrottbehälter 61, anschließend über die Abfuhr 23 und die Verbindungsleitung 27, das Zentralrohr 21, die Verbindungsleitung 26 und die Zufuhr 24 durch den Schrottbehälter 62 und von dort über die Abfuhr 25 und die Umgenungsleitung 29 zur Gasabfuhrleitung 18.

Beide Behälter 61 und 62 werden von unten in Reihe mit heißen Verbrennungsgasen beaufschlagt.

In der Figur 1.2 bleiben die Armaturen 32, 35 und 38 geschlossen, die Armatur 33 wird geöffnet und die bisher offenen Armaturen 31, 36 und 37 werden geschlossen.

In dieser Phase strömt ohne Unterbrechung das Verbrennungsgas ausschließlich durch den Behälter 62, der sich in der vorliegenden Figur in der Station 55 befindet. Die Station 54 wird frei, der Behälter 61 ist vom Fahrgestell 51 in die freie Position 56 verbracht worden, von hier aus ist der Behälter 61 entnehmbar und zur Schrottzufuhr 15 des Schmelzofens 16 verbringbar. Parallel hierzu wird vom Schrottplatz 80 der Schrottbehälter 69 aufgenommen und im Fahrgestellt 51 abgelegt und von diesem in die Station 54 transportiert.
In der Figur 1.3 sind die Armaturen 31, 34, 36 und 37 geschlossen, alle übrigen sind geöffnet mit der Folge, daß die heißen Verbrennungsgase durch den Schrottbehälter 62, der schon in der Umsetzphase aufgeneizt wurde und anschließend durch den frisch herangebrachten Schrottbehälter 69, der in der Station 54 abgestellt wurde, strömen.
Der Schrottbehälter 61 wird nach Abgabe seines Heißschrottes zum Schrottplatz 80 transportiert, wobei er vor Absetzen am Schrottplatz um 180 Grad gedreht wird, so daß das Gitter, welches bei der Schrottvorgabe vom Ofen wegwies, bei der Schrotteinfüllung am Boden abgesetzt wird.

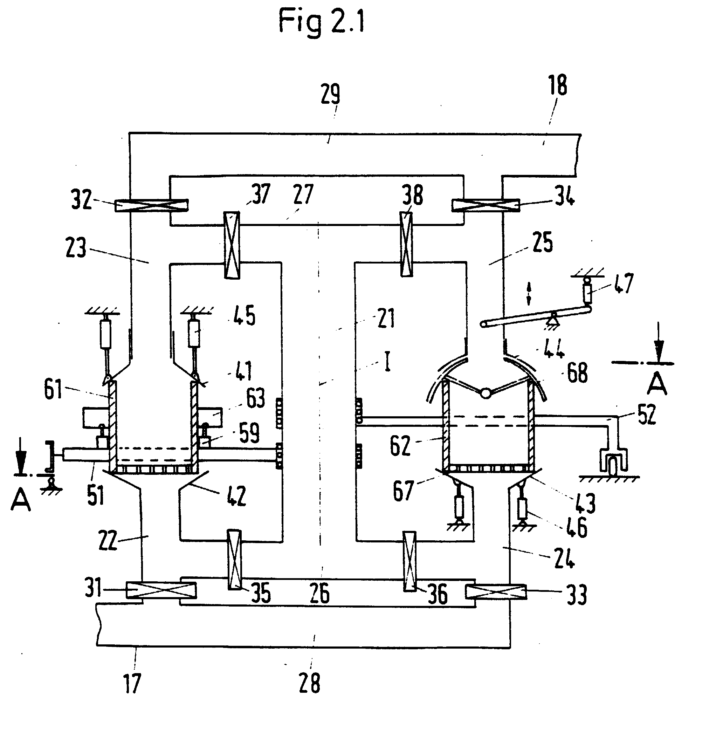

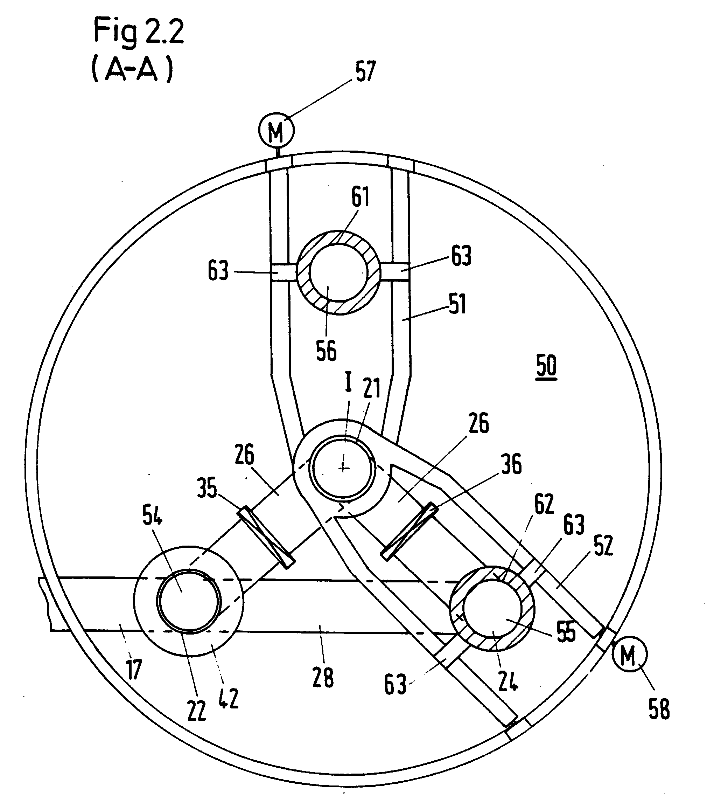

In der Figur 2.1 sind die Gasführungen 20 einschließlich der Armaturen 30 zwischen der Gaszufuhrleitung 17 und der Gasabfuhrleitung 18 mit den im bereits in der Figur 1 verwendeten Positionierungen aufgeführt. Ergänzend dazu sind die in den Fahrgestellen 51 und 52 angeordneten Schrottbehälter 61 und 62 in ihrer Zuordnung zu Hauben 40 skizziert. Im linken Teil der Figur 2.1 ist der Behälter 61 in eine mit der Zufuhr 22 fest verbundene Haube 42 einlegbar. Das Heben und SenKen des Behälters 61 erfolgt durch eine am Fahrgestell 51 angeordnete Hebeeinrichtung 59, die sich gegen Tragbolzen 63 des Schrottbehälters 61 abstützt.

An der Abführleitung 23 ist eine durch eine Haubenverschiebung 45 heb- und senkbare Haube 41 angeordnet.

Im rechten Teil der Figur 2.1 ist das Fahrgestell 52 dargestellt, in das der Schrottbehälter 52 unmittelbar eingebracht wird. Die durch ein Gitter 67 verschlossene Öffnung des Behälters 62 lehnt sich gegen eine durch Haubenverschiebungen 46 koaxial zur Zufuhr 24 verschiebbare Haube 43.

Der Behälter 62 weist eine Bodenkappe 68 auf, die in der Aufwärmphase geöffnet ist und sich an eine Haube 44 anlehnt, die durch eine Haubenverschiebung 47 koaxial zur Abfuhr 55 bewegbar ist.

Die Figur 2.2 zeigt einen Schnitt entlang der Linie AA durch die Schrottvorwärmstation 50. Hierbei befindet sich das Fahrgestell 51, das den sich mit den Tragbolzen auf ihm abstützenden Schrottbehälter 61 in der freien Position 56 befindet. Das Fahrgestell 51 ist durch einen Antrieb 57 um die zentrale Achse I drehbar. In der Station 55 befindet sich das Fahrgestell 52 mit dem Schrottbehälter 62. Das Fahrgestell 52 ist durch einen Motor 58 verfahrbar.
Die Station 54 ist in der Figur nicht belegt. Erkennbar ist die Haube 42, die an die Zufuhr 22 angeschlossen ist, die einerseits mit der Gaszufuhrleitung 17, der Umgehungsleitung 28 sowie der die Armatur 35 aufweisende Verbindungsleitung 26 verbunden ist. Die Verbindungsleitung 26 stellt zum einen die Verbindung zwischen dem Zentralrohr 21 und der Zufuhr 22 wie auch der Zufuhrleitung 24 dar, wobei im letzteren Leitungsabschnitt die Armatur 36 vorgesehen ist.

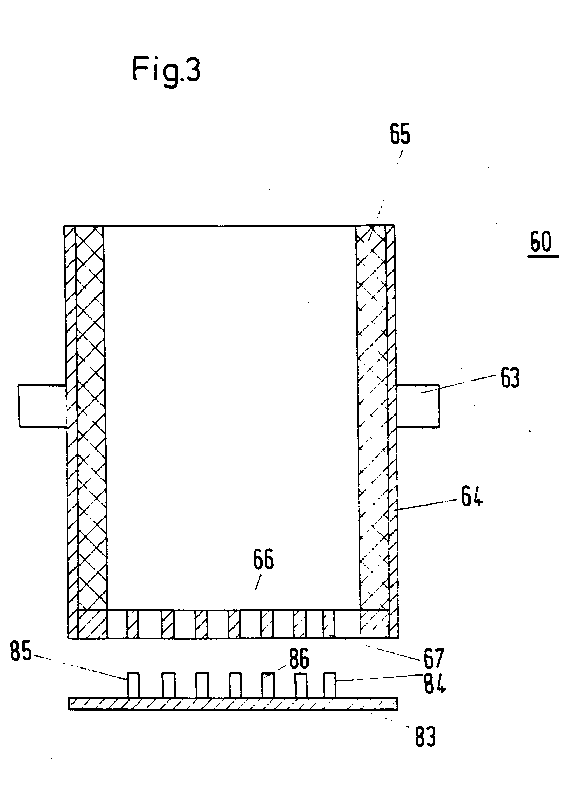

Die Figur 3 zeigt einen Schnitt durch einen Schrottbehälter 60 mit einem Mantel 64, in dem eine Wärmeisolierung 65 angeordnet ist und der nach außen ragende Tragbolzen 63 besitzt. Eine Öffnung 66 des eine zylindrische Form aufweisenden Behälters ist durch ein Gitter 67 abgedeckt.
In die Öffnungen des Gitters 67 sind Bürstenelemente 84 einbringbar. Diese Bürstenelemente sind auf einer Prallplatte 83 angeordnet. Sie bestehen aus stoßdämpfendem Material 85 oder weisen Dämpfungslemente, beispielsweise Federn 86 auf.

### Positionsliste

- 10: Schmelzofen
- 11: Untergefäß
- 12: Obergefäß
- 13: Abgasauslaßleitung
- 14: Deckel
- 15: Schrottzufuhr
- 16: Abgasverbrennungskammer
- 17: Gaszufuhrleitung
- 18: Gasabfuhrleitung
- 19: Absaugung
- 20: Gasführung
- 21: Zentralrohr
- 22: Zufuhr 54
- 23: Abfuhr 54
- 24: Zufuhr 55
- 25: Abfuhr 55
- 26: Verbindungsleitung 22/24
- 27: Verbindungsleitung 23/25
- 28: Umgenungleitung 26
- 29: Umgenungsleitung 27
- 30: Armaturen
- 31: Armatur 22
- 32: Armatur 23
- 33: Armatur 24
- 34: Armatur 25
- 35: Armatur 26/22
- 36: Armatur 26/24
- 37: Armatur 27/23
- 38: Armatur 27/25
- 40: Hauben
- 41: Haube 22
- 42: Haube 23
- 43: Haube 24
- 44: Haube 25
- 45: Haubenverschiebung 41
- 46: Haubenverschiebung 43
- 47: Haubenverschiebung 44
- 50: Schrottvorwärmstation
- 51: Fahrgestell 61
- 52: Fahrgestell 62
- 53: Zentralrohr
- 54: Station 1
- 55: Station 2
- 56: Freiposition
- 57: Antrieb 51
- 58: Antrieb 52
- 59: Hebeeinrichtung
- 61: Schrottbehälter 1
- 62: Schrottbehälter 2
- 63: Tragbolzen
- 64: Mantel
- 65: Wärmeisolierung
- 66: Öffnung
- 67: Gitter
- 68: Bodenkappe
- 69: Schrottbehälter 3
- 70: Meß- und Regelstation
- 80: Schrottplatz
- 81: Schrottkran
- 82: Magnet
- 83: Prallplatte
- 84: Bürstenelement
- 85: Stoßdämpfendes Material
- 86: Dämfungselemente
- I: Zentralachse

## Patentansprüche

1. Verfahren zum Einsetzen von Schrott in Schmelzöfen zur Stahlerzeugung, bei dem der Schrott vorgewärmt wird und zur Vorwärmung die in den Abgasen des Ofens enthaltene, sich aus fühlbarer Wärme und chemisch gebundener Wärme in den brennbaren Anteilen Der Abgase zusammensetzende Energie verwendet wird, wobei das Abgas zu einer in einer Abgasauslaßleitung eingeschaltete Abgasverbrennungskammer geleitet, hier mit Luft zu Verbrennungsgas verbrannt, anschließend mit Schrott gefüllten Behältern zugeführt und über ein Gebläse abgesaugt wird, gekennzeichnet durch folgende Merkmale:
a) die Verbrennungsabgase durchströmen über einen als Gitter ausgebildeten Boden die mit Schrott gefüllten Behälter ohne zeitliche Unterbrechung, wobei mindestens zwei in Reihe geschaltete Schrottbehälter vom Verbrennungsgas vertikal von unten nach oben durchströmt werden und nur in der umsetzzeit mindestens ein Schrottbehälter an die Gasversorgung angeschlossen ist,
b) der bezuglich der Wärmezufuhr in der Reihe als erster befindliche Schrottbehälter wira nach Erreichen der gewünschten Schrottemperatur von der Wärmezufuhr getrennt und in eine Freiposition umgesetzt
c) von dieser Freiposition wird der mit Heißschrott gefüllte, wärmeisolierte Behälter aufgenommen und zum Schmetzofen transportiert.
d) in die leere Freiposition wird ein auf dem Schrottplatz mit frischem Schrott gefüllter Behälter abgestellt und von dort in die leere Aufwärmposition umgesetzt, und
e) der Behälter wird an die heißen Verbrennungsgase in Reine hinter den in der Aufwärmung befindlichen Behälter geschaltet und entsprechend a) von Verbrennungsgasen durchströmt.

2. Verfahren nach Anspruch 1,
dadurch gekennzeichnet,
daß die Verbrennungsgase vor der ersten Beruhrung mit dem im Behälter befindlichen Schrott in einer der Behälteröffnung entsprechenden Breite zugeführt werden.

3. Verfahren nach Anspruch 1,
dadurch gekennzeichnet,
daß die Schrottbehälter in der Stellung, in der sie mit Schrott befüllt werben, von den an der Gitterseite eintretenden Verbrennungsgasen durchströmt werden.

4. Stahlwerkseinrichtung mit einem Schmelzofen, an dem rauchgasseitig eine Abgasverbrennungskammer angeschlossen ist, mit einer Schrottvorwärmstation einschließlich einer Absaugeinrichtung und mit Behältern, in denen Kaltschrott vom Schrottplatz zur Vorwärmstation, aufgewärmter Schrott von dieser zum Schmelzofen transportierbar ist, zur Durchführung des Verfahrens nach Anspruch 1,
dadurch gekennzeichnet,
daß die Schrottvorwärmstation (50) eine karussellartigen Aufbau aufweist, bei dem die Schrottbehälter (61, 62), die zylindrische gestaltet sind und einen als Gitter (67) ausgebildeten Boden aufweisen, über Fahrgestelle (51,52), die um eine zentrale Achse (I) drehbar sind, mindestens zwei Aufwärmstationen (54,55) zuführbar sind,
daß an den Aufwärmstationen (54,55) fest verlegte Rohrleitungen (21-29) der Vorwärmgaszu- (17) und -abführung (18) münden, und daß eine weitere Station (56) als Freiposition ausgebildet ist.

5. Stahlwerkseinrichtung nach Anspruch 4,
dadurch gekennzeicnnet,
daß die Mündungen der Rohrleitungen (22-25) Hauben (41-44) besitzen, die Koaxial zu den Leitungsenden verschiebbar sind und sich während der Betriebsphase gasdicht an die Schrottbehältern (61,62) anlennen.

6. Stahlwerkseinrichtung nach Anspruch 5,
dadurch gekennzeichnet,
daß die Verbindungsleitungen (26,27) in der Weise angeordnet sind, daß parallel zu den Zu- und Abführungen (22,23 und 24,25) zu den Schrottbehältern (61,62) ein zentrales Rohr (21) geführt ist, das kopf- und fußendig mittig in den Verbindungsleitungen (26,27) endet und
daß an die Mündungen dieser Verbindungsleitungen (26,27) Umgehungsleitungen (28,29) angeschlossen sind.

7. Stahlwerkseinrichtung nach Anspruch 6,
dadurch gekennzeichnet,
daß die Verbindungsleitungen (26,27) und die Umgehungsleitungen (28,29) Armaturen (33-38) aufweisen, die ein beliebiges Führen der Verbrennungsgase ermöglichen.

8. Stahlwerkseinrichtung nach Anspruch 4,
dadurch gekennzeichnet,
daß die Fahrgestelle (51,52) Antriebe (57,58) besitzen, mit denen sie unabhängig voneinander zu beliebigen Stationen (54-56) verfahrbar sind.

9. Stahlwerkseinrichtung nach einem der oben genannten Ansprüche 4-8, dadurch gekennzeichnet,
daß eine Meß- und Regelstation (70) vorgesehen ist, die mit den Armaturen (31-38), den Fahrgestellen (51,52) und den Haubenverschiebungen (45-47) in Verbindung steht.

10. Vorrichtung zur Schrotterwärmung zur Durchführung des Verfahrens nach Anspruch 1 und zum Einsatz in der Stahlwerkseinrichtung nach Anspruch 4, bei dem die Wandung der zur Aufnahme des Schrottes dienenden Behälter (60, 61, 63) aus einem mit einer Wärmeisolierung (65) belegten zylindrischen Metallmantel (64) besteht, dessen eine Öffnung (66) durch ein Gitter (67) abgedeckt ist, wobei das Gitter (67) aus hochwarmfestem Material besteht, z.B. aus Keramik,
eine am Schrottplatz deponierbare Prallplatte (83) vorgesehen ist, die eine bürstenförmige Gestal besitzt und deren Bürstenelemente (84) mit der Freifläche des Gitters (67) korrespondieren, die Behälter (61, 62) mit ihrem Gitter (67) auf die Prallplatte (68) steckbar sind und
die Prallplatte (83) aus einem stoßabsorbierenden Material (85) oder Dämpfungselementen (86) besteht.

## Claims

1. A method for using scrap in melting furnaces for steel production, in which the scrap is preheated and the energy contained in the exhaust gases of the furnace, which is composed of sensible heat and chemically bound heat in the combustible portions of the exhaust gases, is used for preheating, the exhaust gas being passed to an exhaust-gas combustion chamber inserted into an exhaust-gas outlet line, burned therein with air to form combustion gas, then being supplied to containers filled with scrap and being withdrawn via a fan, characterised by the following features:
a) the combustion exhaust gases flow across a base designed as a grid through the containers filled with scrap without an interruption in time, with the combustion gas flowing vertically from bottom to top through at least two scrap containers connected in series and at least one scrap container being connected to the gas supply only during the transfer time,
b) the scrap container located first in the series in terms of the supply of heat is separated from the supply of heat once the desired scrap temperature has been reached and is transferred into a free position,
c) from this free position the heat-insulated container filled with hot scrap is picked up and transported to the melting furnace,
d) a container filled with fresh scrap on the scrap yard is placed in the empty free position and from there is transferred into the empty heating-up position, and
e) the container is connected to the hot combustion gases in series behind the container being heated up, and combustion gases flow therethrough corresponding to a).

2. A method according to Claim 1, characterised in that the combustion gases before the first contact with the scrap located in the container are supplied in a width corresponding to the container opening.

3. A method according to Claim 1, characterised in that the combustion gases entering on the grid side flow through the scrap containers in the position in which they are filled with scrap.

4. A steel-making apparatus with a melting furnace, to which an exhaust-gas combustion chamber is connected on the flue-gas side, with a scrap preheating station including a suction removal means and with containers in which cold scrap can be transported from the scrap yard to the preheating station and heated scrap can be transported therefrom to the melting furnace, for performing the method according to Claim 1,
characterised in that
the scrap preheating station (50) is of carousel-like construction, in which the scrap containers (61, 62), which are cylindrical and have a base formed as a grid (67), can be supplied to at least two heating-up stations (54, 55) via undercarriages (51, 52) which are pivotable about a central axis (I),
that fixed pipes (21-29) of the supply means (17) and removal means (18) for preheating gas open into the heating-up stations (54, 55), and that an additional station (56) is designed as a free position.

5. A steel-making apparatus according to Claim 4, characterised in that the mouths of the pipes (22-25) have hoods (41-44), which are displaceable coaxially to the pipe ends and during the operating phase rest in gas-tight manner against the scrap containers (61, 62).

6. A steel-making apparatus according to Claim 5, characterised in that the connecting lines (26, 27) are arranged such that a central pipe (21) is guided parallel to the supply and removal means (22, 23 and 24, 25) for the scrap containers (61, 62), which pipe ends at the top and bottom centrally in the connecting lines (26, 27), and
that bypass lines (28, 29) are connected to the mouths of these connecting lines (26, 27).

7. A steel-making apparatus according to Claim 6, characterised in that the connecting lines (26, 27) and the bypass lines (28, 29) have fittings (33-38) which permit guidance of the combustion gases in any manner desired.

8. A steel-making apparatus according to Claim 4, characterised in that the undercarriages (51, 52) have drives (57, 58) by means of which they can be moved to any stations (54-56) desired, independently of one another.

9. A steel-making apparatus according to one of the above Claims 4 - 8, characterised in that a measuring and regulating station (70) is provided which is connected to the fittings (31-38), the undercarriages (51, 52) and the hood displacement means (45-47).

10. An apparatus for heating scrap for performing the method according to Claim 1 and for use in the steel-making apparatus according to Claim 4, in which the walls of the container (60, 61, 63) serving to receive the scrap consist of a cylindrical metal shell (64) covered with heat insulation (65), the one opening (66) of which is covered by a grid (67), the grid (67) consisting of high-temperature-resistant material, e.g. of ceramic,
a baffle plate (83) which can be dumped at the scrap yard is provided, which has a brush-like shape and the brush elements (84) of which correspond with the free surface of the grid (67), the containers (61, 62) can be inserted on the baffle plate (68) using their grid (67) and
the baffle plate (83) consists of an impact-absorbing material (85) or damping elements (86).

## Revendications

1. Procédé pour utiliser des ferrailles dans des fours de fusion pour fabriquer de l'acier, dans lequel les ferrailles sont préchauffées et, pour le préchauffage, il est utilisé l'énergie contenue dans les gaz d'échappement du four, constituée de la chaleur sensible et de la chaleur chimiquement liée dans les parties brûlables des gaz de combustion, le gaz d'échappement étant guidé vers une chambre de combustion de ceux-ci montée dans un conduit d'évacuation de gaz d'échappement, y étant brûlé avec de l'air en gaz de combustion, et étant ensuite amené à des récipients remplis de ferrailles, et étant aspiré par l'intermédiaire d'une soufflante,
caractérisé par les particularités suivantes :
a) les gaz d'échappement de combustion s'écoulent, par l'intermédiaire d'un fond réalisé comme grille, à travers les récipients remplis de ferrailles sans interruption temporelle, au moins deux récipients de ferrailles montés en série étant traversés verticalement de bas en haut par le gaz de combustion et au moins un récipient de ferrailles étant raccordé à l'alimentation de gaz uniquement dans le temps de déplacement,
b) le récipient de ferrailles se trouvant en premier dans la série relativement à l'amenée de chaleur est séparé de l'amenée de chaleur après avoir atteint la température souhaitée des ferrailles et déplacé dans une position libre,
c) de cette position libre, le récipient thermiquement isolé rempli de ferrailles chauffées est reçu et transporté vers le four de fusion,
d) dans la position libre vide, un récipient rempli de nouvelles ferrailles à l'emplacement des ferrailles est éloigné et, de là, déplacé dans la position de réchauffement vide et,
e) le récipient est relié aux gaz de combustion chauds en série derrière le récipient se trouvant dans la phase de réchauffement et, de façon correspondant à a) traversé par les gaz de combustion.

2. Procédé selon la revendication 1,
caractérisé en ce que les gaz de combustion, avant le premier contact avec les ferrailles se trouvant dans le récipient, sont amenés sur une largeur correspondant à l'ouverture du récipient.

3. Procédé selon la revendication 1,
caractérisé en ce que les récipients de ferrailles, dans la position dans laquelle ils sont remplis de ferrailles, sont traversés par les gaz de combustion entrant sur le côté de grille.

4. Dispositif d'aciérie comportant un four de fusion, auquel est raccordée, du côté des gaz de fumée, une chambre de combustion des gaz d'échappement, un poste de préchauffage des ferrailles y compris un dispositif d'aspiration et des récipients dans lesquels des ferrailles froides peuvent être transportées de l'emplacement des ferrailles au poste de préchauffage, et les ferrailles réchauffées peuvent être transportées de celui-ci au four de fusion, pour la mise en oeuvre du procédé selon la revendication 1,
caractérisé en que le poste de préchauffage des ferrailles (50) présente une construction du type carrousel, dans laquelle les récipients de ferrailles (61,62) qui sont réalisés de façon cylindrique et présentent un fond réalisé comme grille (67), peuvent être amenés par l'intermédiaire de chariots (51,52), qui peuvent tourner autour d'un axe central (I), à au moins deux postes de réchauffement (54,55), en ce que des conduits disposés de façon fixe (21-29) de l'amenée (17) et de l'évacuation (18) du gaz de préchauffage débouchent au niveau des postes de réchauffement (54,55), et en ce qu'un autre poste (56) est réalisé comme position libre.

5. Dispositif d'aciérie selon la revendication 4,
caractérisé en ce que les embouchures des conduits (22-25) présentent des capots (41-44) qui sont déplaçables coaxialement aux extrémités des conduits et, pendant la phase de fonctionnement, s'appuient de façon étanche aux gaz contre les récipients de ferrailles (61,62).

6. Dispositif d'aciérie selon la revendication 5,
caractérisé en ce que les conduits de liaison (26,27) sont agencés de façon qu'un tube central (21) est guidé parallèlement aux amenées et évacuations (22,23 et 24,25) aux récipients de ferrailles (61,62), conduit qui s'achève, à l'extrémité de tête et à l'extrémité de pied, de façon centrale, dans les conduits de liaison (26,27), et en ce que des conduits de dérivation (28,29) sont raccordés aux embouchures de ces conduits de liaison (26,27).

7. Dispositif d'aciérie selon la revendication 6,
caractérisé en ce que les conduits de liaison (26,27) et les conduits de dérivation (28,29) présentent des armatures (33-38) qui permettent un guidage quelconque des gaz de combustion.

8. Dispositif d'aciérie selon la revendication 4,
caractérisé en ce que les chariots (51,52) présentent des entraînements (57,58) grâce auxquels ils sont déplaçables indépendamment l'un de l'autre vers des postes quelconques (54-56).

9. Dispositif d'aciérie selon une des revendications précitées 4-8,
caractérisé en ce qu'un poste de mesure et de réglage (70) est prévu qui est en liaison avec les armatures (31-38), les chariots (51,52), et les moyens de déplacement des capots (45-47).

10. Dispositif pour réchauffer des ferrailles pour la mise en oeuvre du procédé selon la revendication 1 et pour être utilisé dans le dispositif d'aciérie selon la revendication 4, dans lequel la paroi des récipients (60,61,63) servant à la réception des ferrailles est constituée d'une enveloppe métallique cylindrique (64) garnie d'une isolation thermique (65), dont une ouverture (66) est recouverte par une grille (67), la grille (67) étant constituée d'une matière résistant aux hautes températures, par exemple en céramique, une plaque de choc (83) pouvant être déposée à l'emplacement des ferrailles est prévue, qui possède une structure du type brosse et dont les éléments de brosse (84) correspondent avec la surface libre de la grille (67), les récipients (61,62) avec leur grille (67) peuvent être enfichés sur la plaque de choc (83), et la plaque de choc (83) est constituée d'une matière (85) absorbant les chocs ou d'éléments d'amortissement (86).
